Europäisches Patentamt

European Patent Office

Office européen des brevets

(19)

(11) Veröffentlichungsnummer: **0 031 953**
**A2**

(12) # EUROPÄISCHE PATENTANMELDUNG

(21) Anmeldenummer: 80108201.7

(22) Anmeldetag: 24.12.80

(51) Int. Cl.³: **A 21 C 13/00**

(30) Priorität: 03.01.80 DE 3000059

(43) Veröffentlichungstag der Anmeldung:
15.07.81 Patentblatt 81'28

(84) Benannte Vertragsstaaten:
AT BE CH FR LI NL

(71) Anmelder: Eisvoigt Ludwig Voigtländer GmbH & Co KG
Halberstädter Strasse
D-3340 Wolfenbüttel(DE)

(72) Erfinder: Voigtländer, Ludwig-Dietrich
Halberstädter Strasse 2
D-3340 Wolfenbüttel(DE)

(74) Vertreter: Lins, Edgar, Dipl.-Phys.
Patentanwälte Gramm + Lins Theodor-Heuss-Strasse 2
D-3300 Braunschweig(DE)

(54) Verfahren und Vorrichtung zum Konservieren und Gären von Teiglingen.

(57) Bei einem Verfahren zum Konservieren und Gären von Teiglingen unter Verwendung eines Aufbereitungs-und Vorbereitungsschrankes (Gärschrank) mit einem im Schrankinnenraum (2) angeordneten Kühl - und Heizkörper (4) eines Kühl - und Heizaggregates und einem Ventilator (5) zur Umwälzung der gekühlten bzw. erwärmten Luft, wobei nach dem Umschalten von Kühlung auf Heizung zur Einleitung des Gärprozesses die Temperatur im Schrankinnenraum (2) auf bis zu etwa 40°C angehoben wird, wird eine geeignete Regelung der Feuchtigkeit durch folgende Verfahrensschritte erreicht:

a) Vor dem Aufheizen wird der Kühl - uns Heizkörper (4) zuerst elektrisch abgetaut, wobei das dabei abschmelzende Wasser aus dem Schrankinnenraum (2) nach außen abgeleitet wird;

b) die zuvor erfolgte Umwälzung der gekühlten Luft wird unterbrochen;

c) ist der Kühl- und Heizkörper (4) durch den Abtauvorgang so weit erwärmt, daß sich um ihn herum Dampf bildet, wird die Luft aus dem Umgebungsbereich des Kühl - und Heizkörpers aus dem Schrankinnenraum (2) nach außen geführt, während gleichzeitig Außenluft in den Schrankinnenraum (2) einströmt.

d) nach Beendigung des Abtauvorganges wird der Kühl - und Heizkörper (4) auf ca. 0°C abgekühlt;

e) die Luftspülung wird nach Beendigung des Abtauvorganges, spätestens aber nach der Abkühlung des Kühl - und Heizkörpers (4) auf ca. 0°C beendet;

f) erst nach Abkühlung des Kühl - und Heizkörpers (4) auf ca. 0°C wird die Umwälzung der Luft im Schrankinnenraum (2) wieder aufgenommen, wobei gleichzeitig die eigentliche Aufheizung des Kühl- und Heizkörpers (4) auf ca. 40°C beginnt.

Zur Durchführung des Verfahrens wird eine Vorrichtung vorgeschlagen, bei der für die Abfuhr der feuchten Luft aus dem Umgebungsbereich des Kühl - und Heizkörpers (4) nach außen ein Zusatzlüfter (6) im oberen Teil des Schrankinnenraums (2) so angeordnet is, daß der Kühl - und Heizkörper im unmittelbaren Luftströmungsbereich zwischen dem Zusatzlüfter und einer verschließbaren Luftauslaßöffnung (7) in der Schrankwandung (1) liegt, während zur Erzielung der Luftpülung in der Schrankwand (1) zusätzlich eine verschließbare Lufteinlaßöffnung (8) vorgesehen ist.

./...

# Patentanwälte GRAMM + LINS

**0031953**

Dipl.-Ing. Werner Gramm
Dipl.-Phys. Edgar Lins

D-3300 Braunschweig

E I S V O I G T
Ludwig Voigtländer GmbH & Co KG
Halberstädter Straße
3340  Wolfenbüttel

Telefon:   (05 31) 8 00 79
Telex:     09 52 620

Anwaltsakte   3898 EPÜ
Datum         23.12.1980

"Verfahren und Vorrichtung zum Konservieren
 und Gären von Teiglingen"


Die Erfindung betrifft ein Verfahren zum Konservieren und Gären
von Teiglingen unter Verwendung eines Aufbereitungs- und Vorbereitungsschrankes (Gärschrank) mit einem im Schrankinnenraum
angeordneten Kühl- und Heizkörper eines Kühl- und Heizaggregates und einem Ventilator zur Umwälzung der gekühlten bzw. erwärmten Luft, wobei nach dem Umschalten von Kühlung auf Heizung
zur Einleitung des Gärprozesses die Temperatur im Schrankinnenraum auf bis zu etwa 40° C angehoben wird.

Die Erfindung betrifft ferner eine Vorrichtung zur Durchführung
dieses Verfahrens.

Ein Gärschrank zur Durchführung dieses vorbekannten Verfahrens
läßt sich z.B. der DE-OS 22 00 836 oder aber auch dem
DE-GM 19 93 502 entnehmen. Zu Beginn des Gärprozesses liegt die
Temperatur im Schrankinnenraum bei etwa 0° C . Für den Gärprozess muß diese Temperatur jedoch auf bis zu 40° C angehoben werden. Hierfür ist der Kühlkörper des Kühlaggregates mit einer
Heizeinrichtung ausgestattet, die in die große Oberfläche des

- 2, -

Kühlkörpers eingebaut ist. Bei Umschaltung von Kühlung auf Heizung wird ein Teil der zuvor an dem Kühlkörper als Reif niedergeschlagenen Feuchtigkeit als Kondenswasser ablaufen und in üblicher Weise aus dem Schrankinnenraum nach außen abgeführt werden. Ein Teil des Reifes wird aber unmittelbar in die Schrank-Innenatmosphäre hineinverdampfen und dadurch im Schrankinnenraum die Feuchtigkeit schlagartig erhöhen. Die konservierten Teiglinge bedürfen jedoch während des Gärens einer bestimmten Luftfeuchte, die nicht unterschritten, aber auch nicht überschritten werden darf.

Der Erfindung liegt die Erkenntnis der vorstehend erläuterten Zusammenhänge sowie die Aufgabe zugrunde, ein schnell wirksames und einfach durchzuführendes Verfahren zur Entfeuchtung sowie eine zur Durchführung dieses Verfahrens geeignete Vorrichtung zu entwickeln.

Diese Aufgabe wird gemäß der Erfindung durch folgende, bei der Umschaltung von Kühlung auf Heizung durchzuführende Verfahrensschritte gelöst:

a) Vor dem Aufheizen wird der Kühl- und Heizkörper zuerst elektrisch abgetaut, wobei das dabei abschmelzende Wasser aus dem Schrankinnenraum nach außen abgeleitet wird;

b) die zuvor erfolgte Umwälzung der gekühlten Luft wird unterbrochen;

c) ist der Kühl- und Heizkörper durch den Abtauvorgang so weit erwärmt, daß sich um ihn herum Dampf bildet, wird die Luft aus dem Umgebungsbereich des Kühl- und Heizkörpers aus dem Schrankinnenraum nach außen geführt, während gleichzeitig Außenluft in den Schrankinnenraum einströmt;

d) nach Beendigung des Abtauvorganges wird der Kühl- und
   Heizkörper auf ca. 0° C abgekühlt;

e) die Luftspülung wird nach Beendigung des Abtauvorganges,
   spätestens aber nach der Abkühlung des Kühl- und Heizkörpers auf ca. 0° C beendet;

f) erst nach der Abkühlung des Kühl- und Heizkörpers auf ca.0° C
   wird die Umwälzung der Luft im Schrankinnenraum wieder aufgenommen, wobei gleichzeitig die eigentliche Aufheizung des
   Kühl- und Heizkörpers auf ca. 40° C beginnt.

Zur Vermeidung der schlagartigen Erhöhung der Luftfeuchtigkeit
im Schrankinnenraum wird also erfindungsgemäß zuerst einmal der
für diese Feuchtigkeitserhöhung ursächliche Reif bzw. das Eis,
das an dem Heiz- und Kühlkörper hängt, abgetaut; das so entstehende Schmelzwasser wird vollständig nach außen abgeleitet.
Durch diesen Abtauvorgang erwärmt sich der Heiz- und Kühlkörper
auf ca. 15° C; während des Abtauens bildet sich somit um den
Heiz- und Kühlkörper herum 100 % feuchte Luft. Um zu verhindern,
daß diese feuchte Luft im Schrankinnenraum verteilt wird, wird
der Lüfter zur Umwälzung der gekühlten Luft abgestellt. Da
warme, feuchte Luft leichter ist als kalte trockene Luft, verbleibt die sich beim Abtauen bildende feuchte Luft im unmittelbaren Umgebungsbereich des Heiz- und Kühlkörpers, wenn dieser
im oberen Teil des Schrankinnenraumes angeordnet ist. Erfindungsgemäß ist es dann möglich, diese feuchte Luft aus dem Schrankinnenraum nach außen zu blasen und gleichzeitig die so abgeführte Luft durch frische Außenluft zu ersetzen, die in den Schrankinnenraum einströmt. Nach Beendigung des Abtauvorganges weist
der Heiz-und Kühlkörper - wie oben erwähnt - eine Temperatur von

- 4 -

ca. 15° C auf. Würden nunmehr sofort der eigentliche Heizvorgang eingeleitet und die Umwälzung der Luft im Schrankinnenraum wieder aufgenommen werden, würde eine schlagartige Erwärmung der Teiglinge von ca. 0° C auf die Starttemperatur von ca. 15° C erfolgen. Dies müßte aber zu einer Qualitätsminderung der Teiglinge führen. Erfindungsgemäß wird daher nach Beendigung des Abtauvorganges der Kühl- und Heizkörper zuerst einmal wieder auf 0° C, also auf die Temperatur der Teiglinge abgekühlt, um erst anschließend den eigentlichen Heizvorgang einzuleiten. Die Umwälzung der Luft im Schrankinnenraum kann frühestens nach Beendigung des Abtauvorganges, spätestens aber zu Beginn der Aufheizung wieder aufgenommen werden.

Der Übergang zwischen Kühlung und Heizung wird durch einen Programmablauf vorgegeben, so daß steuerungstechnisch genau feststeht, zu welchem Zeitpunkt die Heizung im Kühl- und Heizkörper beginnt. Erfindungsgemäß lassen sich daher alle Verfahrensschritte über eine Zeitschaltung steuern.

Eine zur Durchführung des neuen Verfahrens geeignete Vorrichtung ist dadurch gekennzeichnet, daß für die Abfuhr der feuchten Luft aus dem Umgebungsbereich des Kühl- und Heizkörpers nach außen ein Zusatzlüfter im oberen Teil des Schrankinnenraumes so angeordnet ist, daß der Kühl- und Heizkörper im unmittelbaren Luftströmungsbereich zwischen dem Zusatzlüfter und einer verschließbaren Luftauslaßöffnung in der Schrankwandung liegt, während zur Erzielung der Luftspülung in der Schrankwand zusätzlich eine verschließbare Lufteinlaßöffnung vorgesehen ist.

Dabei ist es vorteilhaft, wenn die Luftein- und -auslaßöffnung über automatisch gesteuerte Klappen verschließbar sind.

- 5 -

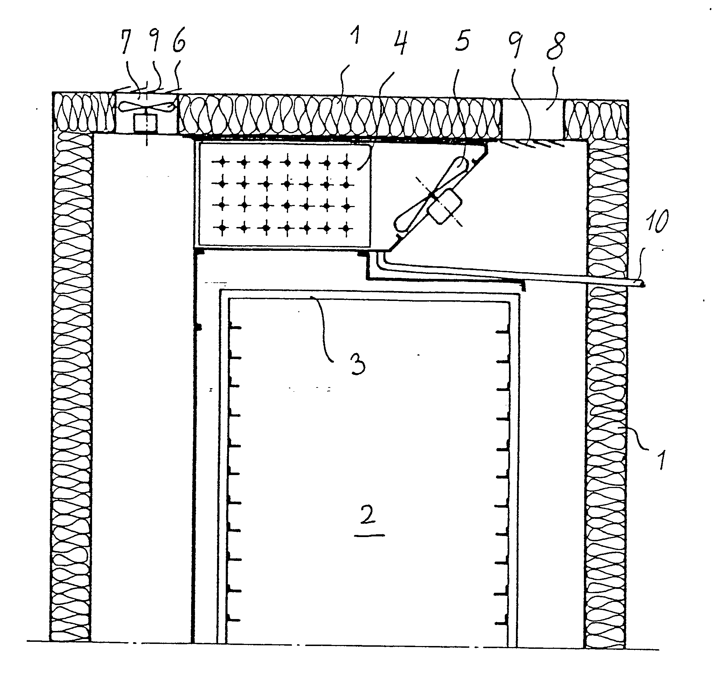

In der Zeichnung ist eine als Beispiel dienende Ausführungsform
der Erfindung schematisch dargestellt. Die Zeichnung zeigt
einen Vertikalschnitt durch den oberen Teil eines Gärschrankes.
Die isolierte Schrankwandung dieses Gärschrankes ist mit 1 bezeichnet. Im Innenraum 2 des Gärschrankes ist ein Hordenwagen 3
angedeutet. Im oberen Teil des Innenraumes 2 sind ein Kühl- und
Heizregister 4 eines nicht näher dargestellten Kühl- und Heizaggregates sowie ein Ventilator 5 zur Umwälzung der gekühlten
bzw. erwärmten Luft angeordnet. Außerdem ist erfindungsgemäß ein
Zusatzlüfter 6 vorgesehen, der vor einer Luftauslaßöffnung 7 angeordnet ist, die den Innenraum 2 des Gärschrankes mit der Umgebung verbindet. Ferner ist in der Schrankwand 1 eine Lufteinlaßöffnung 8 vorgesehen. Beide Öffnungen 7,8 sind durch automatisch gesteuerte Klappen 9 verschließbar, die z.B. federbelastet sein können.

Während der üblichen Kühlung sind die beiden Öffnungen 7,8 geschlossen, der Zusatzlüfter 6 ist abgeschaltet, und der Ventilator 5 wälzt die gekühlte Luft im Innenraum 2 des Gärschrankes
um. Soll von Kühlung auf Heizung umgeschaltet werden, wird zuvor
das Kühl- und Heizregister 4 elektrisch abgetaut, wobei das dabei abschmelzende Wasser aus dem Schrankinnenraum 2 über einen
Tauwasserabfluß 10 durch die Schrankwand 1 nach außen abgeleitet
wird. Gleichzeitig wird der Ventilator 5 abgeschaltet, also die
Umwälzung der gekühlten Luft unterbrochen. Durch diesen Abtauvorgang erwärmt sich das Kühl- und Heizregister 4, wobei sich
um dieses Kühl- und Heizregister herum 100 % feuchte Luft bildet.
Um diese feuchte Luft aus dem Innenraum 2 nach außen abzuführen,
werden die Lufteinlaßöffnung 8 und die Luftauslaßöffnung 7 geöffnet und der Zusatzlüfter 6 angestellt. Die Anordnung der beiden Öffnungen 7,8 sowie des Zusatzlüfters 6 ist so gewählt, daß
das Kühl- und Heizregister 4 im unmittelbaren Strömungsbereich

- 6 -

- 6 -

der von dem Zusatzlüfter 6 durch die Öffnung 7 angesaugten und aus der Öffnung 8 nach außen abgeführten Luft liegt.

Nach Beendigung des Abtauvorganges wird das Kühl- und Heizregister 4 auf ca. 0° C abgekühlt. Spätestens dann werden der Zusatzlüfter 6 abgestellt und die Öffnungen 7,8 verschlossen. Erst nach der erzielten Abkühlung des Kühl- und Heizregisters auf 0° C wird der Ventilator 5 wieder angestellt, wobei dann gleichzeitig die eigentliche Aufheizung des Kühl- und Heizregisters auf ca. 40° C beginnt.

Gr/Gru.

# Patentanwälte GRAMM + LINS

Dipl.-Ing. Werner Gramm
Dipl.-Phys. Edgar Lins

**0031953**

D-3300 Braunschweig

E I S V O I G T

Ludwig Voigtländer GmbH & Co KG

Halberstädter Straße

3340   Wolfenbüttel

Telefon:      (05 31) 8 00 79
Telex:         09 52 620

Anwaltsakte   3898  EPÜ
Datum         23.12.1980

Patentansprüche:

1. Verfahren zum Konservieren und Gären von Teiglingen unter
   Verwendung eines Aufbereitungs- und Vorbereitungsschrankes
   (Gärschrank) mit einem im Schrankinnenraum angeordneten
   Kühl- und Heizkörper eines Kühl- und Heizaggregates und
   einem Ventilator zur Umwälzung der gekühlten bzw. erwärmten Luft, wobei nach dem Umschalten von Kühlung auf Heizung
   zur Einleitung des Gärprozesses die Temperatur im Schrankinnenraum auf bis zu etwa 40° C angehoben wird,
   g e k e n n z e i c h n e t  durch folgende, bei der Umschaltung von Kühlung auf Heizung durchzuführende Verfahrensschritte:

   a) Vor dem Aufheizen wird der Kühl- und Heizkörper zuerst
      elektrisch abgetaut, wobei das dabei abschmelzende Wasser aus dem Schrankinnenraum nach außen abgeleitet wird;

   b) die zuvor erfolgte Umwälzung der gekühlten Luft wird
      unterbrochen;

- 2 -

c) ist der Kühl- und Heizkörper durch den Abtauvorgang so weit erwärmt, daß sich um ihn herum Dampf bildet, wird die Luft aus dem Umgebungsbereich des Kühl- und Heizkörpers aus dem Schrankinnenraum nach außen geführt, während gleichzeitig Außenluft in den Schrankinnenraum einströmt;

d) nach Beendigung des Abtauvorganges wird der Kühl- und Heizkörper auf ca. 0° C abgekühlt;

e) die Luftspülung wird nach Beendigung des Abtauvorganges, spätestens aber nach der Abkühlung des Kühl- und Heizkörpers auf ca. 0° C beendet;

f) erst nach der Abkühlung des Kühl- und Heizkörpers auf ca. 0° C wird die Umwälzung der Luft im Schrankinnenraum wieder aufgenommen, wobei gleichzeitig die eigentliche Aufheizung des Kühl- und Heizkörpers auf ca. 40° C beginnt.

2. Verfahren nach Anspruch 1, dadurch gekennzeichnet, daß die Einleitung der einzelnen Verfahrensschritte über eine Zeitschaltung erfolgt.

3. Vorrichtung zur Durchführung des Verfahrens nach Anspruch 1 oder 2, dadurch gekennzeichnet, daß für die Abfuhr der feuchten Luft aus dem Umgebungsbereich des Kühl- und Heizkörpers ( 4 ) nach außen ein Zusatzlüfter ( 6 ) im oberen Teil des Schrankinnenraumes ( 2 ) so angeordnet ist, daß der Kühl- und Heizkörper im unmittelbaren Luftströmungsbereich zwischen

- 3 -

dem Zusatzlüfter und einer verschließbaren Luftauslaßöffnung ( 7 ) in der Schrankwandung ( 1 ) liegt, während zur Erzielung der Luftspülung in der Schrankwand ( 1 ) zusätzlich eine verschließbare Lufteinlaßöffnung ( 8 ) vorgesehen ist.

4. Vorrichtung nach Anspruch 3, dadurch gekennzeichnet, daß die Luftein- und -auslaßöffnung ( 8 , 7 ) über automatisch gesteuerte Klappen ( 9 ) verschließbar sind.

Patentanwälte
G r a m m  +  L i n s
Gr/Gru.

3898 EP **0031953**

7 9 6    1 4 5 9 8

10

3

2

1

E I S V O I G T
Ludwig Voigtländer GmbH & Co KG